**Europäisches Patentamt**

**European Patent Office**

**Office européen des brevets**

(19)

(11) Veröffentlichungsnummer: **0 093 201**
**B1**

(12)

# EUROPÄISCHE PATENTSCHRIFT

(45) Veröffentlichungstag der Patentschrift:
**13.07.88**

(51) Int. Cl.⁴: **B 62 M 3/04**

(21) Anmeldenummer: **82111510.2**

(22) Anmeldetag: **11.12.82**

(54) Antriebsvorrichtung für Fahrräder oder dergleichen.

(30) Priorität: **30.04.82 DE 3216069**

(43) Veröffentlichungstag der Anmeldung:
**09.11.83 Patentblatt 83/45**

(45) Bekanntmachung des Hinweises auf die Patenterteilung:
**13.07.88 Patentblatt 88/28**

(84) Benannte Vertragsstaaten:
**AT BE CH DE FR GB IT LI LU NL SE**

(56) Entgegenhaltungen:
**CH - A - 224 823**
**FR - A - 334 727**
**FR - A - 650 709**
**FR - A - 773 524**
**FR - A - 871 327**
**FR - A - 937 252**
**FR - A - 957 403**
**FR - E - 60 159**

(73) Patentinhaber: **Stuckenbrok, Freder, Rönnelstrasse 87,**
**D-2933 Jade 2 (DE)**

(72) Erfinder: **Stuckenbrok, Freder, Rönnelstrasse 87,**
**D-2933 Jade 2 (DE)**

(74) Vertreter: **Gille, Christian, Dipl.-Ing. et al, Türk, Gille +**
**Hrabal Patentanwälte Bruckner Strasse 20,**
**D-4000 Düsseldorf 13 (DE)**

## Beschreibung

Die Erfindung betrifft einen Tretkurbelantrieb für Fahrräder oder dergleichen gemäss Oberbegriff des einzigen Patentanspruchs.

Fahrräder oder sonstige einen Tretkurbelantrieb aufweisende Fahrzeuge werden durch Muskelkraft angetrieben, wobei der Fahrer auf die Pedale tritt und dadurch eine über eine Kurbel mit dieser verbundene Welle dreht, auf der ein Kettenrad sitzt, das über eine Kette die Drehbewegung der Welle beispielsweise auf das Hinterrad des Fahrzeugs überträgt. Die Antriebsphase beschränkt sich hierbei auf etwa $3/4$ des von den Pedalen bei deren Umlauf überstrichenen vorderen Halbkreises. Üblicherweise beträgt die Trethebellänge etwa 17 cm, so dass sich für den von den Pedalen überstrichenen Tretkreisdurchmesser von etwa 34 cm ergibt. Wenn man versucht, diesen Tretkreis zu vergrössern, um den Hebelarm der Tretkurbel zu verlängern, so dass der Fahrer Muskelkraft für den Antrieb aufwenden muss, so scheitert dies an der Strecklänge der Beine des Fahrers.

Daher werden Übersetzungsgetriebe für Fahrräder verwendet, die meist eine flexible Übersetzung ermöglichen. So kann man beim Bergauffahren oder bei Gegenwind eine kleinere Übersetzung wählen, um mit weniger Kraftaufwand, jedoch mit mehr Tretbewegungen zu fahren. Beim Fahren auf ebener Fahrbahn wählt man für hohe Geschwindigkeiten eine grosse Übersetzung, die zwar weniger Tretbewegungen, dafür aber mehr Muskelkraft erfordert. Bei solchen Übersetzungsgetrieben handelt es sich um eine zusätzliche Einrichtung, bei der der eigentliche Tretkurbelantrieb nicht verändert wird, so dass die vom Fahrer zur Verfügung stehende Muskelkraft nicht optimal genutzt wird.

Zur Verbesserung des Wirkungsgrades eines Tretkurbelantriebes ist es aus CH-A-224 823 bekannt, die Pedale an einer Stange anzuordnen, die gleitbeweglich gelagert ist und somit teleskopartig verlängert und verkürzt werden kann. Hierbei hat man zwar einen längeren Trethebel während der Antriebsphase, jedoch sind am Rahmen Führungen erforderlich, die in Gleitkontakt mit dem teleskopartig verfahrbaren Hebelarm sind, um diesen in jeder Drehphase nach vorne weisend zu halten. Hierbei treten beträchtliche Hebelkräfte auf, die vom Fahrradrahmen aufgefangen werden müssen, so dass dieser entsprechend stabiler ausgebildet werden muss, und hierdurch ein Teil des verbesserten Wirkungsgrades des Tretkurbelantriebs wieder zunichte gemancht wird. CH-A-224 823 entspricht dem Oberbegriff des Anspruchs.

Aus FR-E-60 159 ist es bekannt, eine feststehende Kurvenscheibe vorzusehen, die mittels Abtastrollen abgetastet wird, um den Kurbelarm zeitweilig, insbesondere in der Antriebsphase zu verlängern. Hierbei sind mehrere Abtastrollen vorgesehen, die insbesondere in der Antriebsphase zu beträchtlichen Reibungswiderständen führen. Bei einer alternativen Ausführungsform ist eine Führung im Bereich der Auszugsphase des Hebelarmes des Tretkurbelantriebes vorgesehen, und an beiden Armenden sind Abtastrollen vorgesehen, die auf der feststehenden Kurvenscheibe laufen. Mit Hilfe dieser Führung im Bereich der Auszugsphase des Hebelarmes wird erreicht, dass die Abtastrollen in engem Kontakt mit der Führung und dem entsprechenden Kurvenscheibenteil sind, so dass auch in diesem Fall ein erhöhter Reibungswiderstand gerade in der Anfahrphase des Tretkurbelantriebs in Kauf zu nehmen ist.

Der Erfindung liegt demgegenüber die Aufgabe zugrunde, einen Tretkurbelantrieb für Fahrräder oder dergleichen der eingangs genannten Art bereitzustellen, der einfacher als bisher bekannte Tretkurbelantriebe mit variabler Übersetzung ausgebildet und preiswerter herzustellen ist und bei dem auch nicht die Gefahr besteht, dass die für die Veränderung der Kurbellängen vorgesehenen Abtastteile eine unerwünschte Bremswirkung infolge eines erhöhten Reibungswiderstandes hervorrufen können.

Nach der Erfindung wird diese Aufgabe mit den Merkmalen des einzigen Anspruchs gelöst.

Bei dem erfindungsgemässen Tretkurbelantrieb ist die der Kurvenscheibe gegenüberliegende Führungsbahn nur dort vorhanden, wo sie benötigt wird, nämlich an den Stellen, an denen sich die an der teleskopartig bewegbaren Stange befindliche Abtastrolle von der feststehenden Kurvenscheibe abheben kann. Dadurch ist die Kurvenführung nicht nur einfacher und preiswerter, sondern es ergibt sich auch der Vorteil, dass keine Bremswirkung, bedingt durch zusätzliche Reibungswiderstände, im Bereich der Anfahrphase, d.h. beim Verlängern des Hebelarmes des Tretkurbelantriebes auftritt. Die Ausfahrlänge der Stange ist bei der Ausfahrbewegung der Stange bei der Vergrösserung des Tretkreises durch gesonderte Einrichtungen begrenzt, die einen Art Endanschlag bilden. Der Tretkurbelantrieb nach der Erfindung lässt sich somit insgesamt einfacher und leichter herstellen, sowie mit verhältnismässig geringem Kraftaufwand betätigen.

Die Erfindung wird nachstehend an einem Beispiel unter Bezugnahme auf die beigefügte Zeichnung näher erläutert. Darin zeigt:

Fig. 1 eine Seitenansicht eines Tretkurbelantriebs, woraus die verschiedenen Bewegungsphasen eines teleskopartig zu verlängernden Kurbelarmes mit daran gelagertem Pedal zu erkennen sind,

Fig. 2 eine teilweise geschnittene Draufsicht auf die eine Seite des an einem Fahrradrahmen angebrachten Tretkurbelantriebs und

Fig. 3 einen Querschnitt nach der Linie III–III aus Fig. 2.

In der Nabe 1 eines Fahrradrahmens 2 ist eine Antriebswelle 3 in üblicher Weise gelagert. Auf jedes der aus der Nabe 1 herausragenden Enden der Welle 3 ist eine Buchse 4 aufgesteckt und in bekannter Weise mittels einer Keilschraube 5 drehsicher befestigt.

Die Buchse 4 ist an einer im Querschnitt rechteckigen hohlen Hülse 6 befestigt, die Teil eines teleskopartig ausgebildeten Kurbelarmes 7 ist. Das andere Teil des Kurbelarmes 7 wird von einer im Querschnitt kreisförmigen Stange 8 gebildet, an deren äusseren Ende ein Pedal 9 in üblicher Weise gelagert ist.

Die Stange 8 ist in der Hülse 6 in zwei Gleitlagerbuchsen 10 und 11 verschiebbar geführt, die mit nicht dargestellten Staubringen versehen sein können.

An der nach innen weisenden Seite der Hülse 6 befindet sich ein in die Hülsenwandung durchsetzendes Langloch 12, in das eine Rolle 13 eingreift, welche auf einem in der Stange 8 befestigten, radial zu derselben verlaufenden Bolzen 14 gelagert ist und dafür dient, dass die Stange 8 zwar in Längsrichtung der Hülse 6 verschoben, dabei aber nicht um ihre Längsachse verdreht werden kann.

Auf der Aussenseite der Hülse 6 ist im Bereich des Langloches 12 eine hochstehende, entsprechend ausgebildete Führungsschiene 16 angeordnet, welche die für die Rolle 13 zur Verfügung stehende Führungsfläche bestimmt oder wenigstens vergrössert.

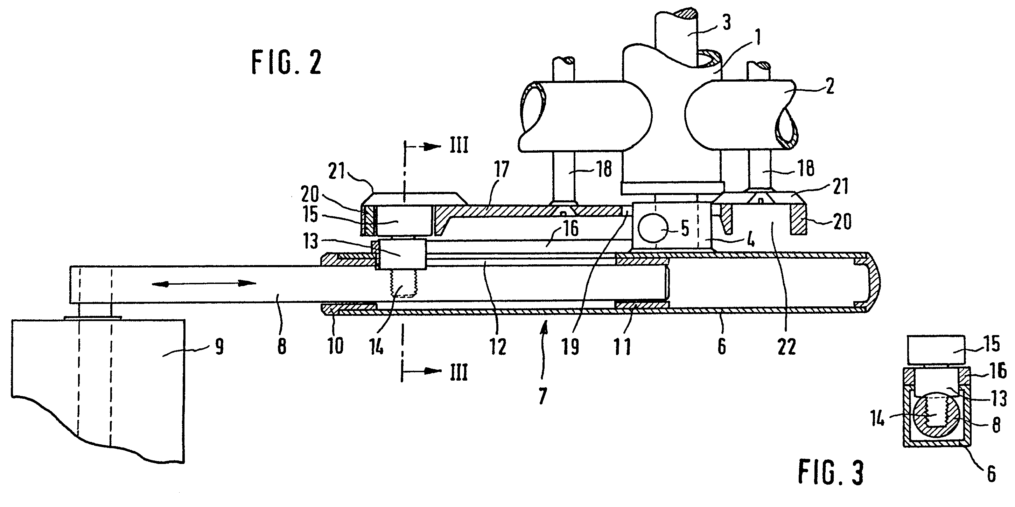

Auf dem äusseren Ende des Bolzens 14 ist eine Abtastrolle 15 gelagert, die zum Abtasten der Kontur einer Kurvenscheibe 17 vorgesehen ist. Die Kurvenscheibe 17 ist mittels Streben 18 am Fahrradrahmen 2 befestigt. Sie enthält eine Öffnung 19, durch die die Welle 3 hindurchgeführt werden kann und auch die Buchse 4, wie Fig. 2 zeigt.

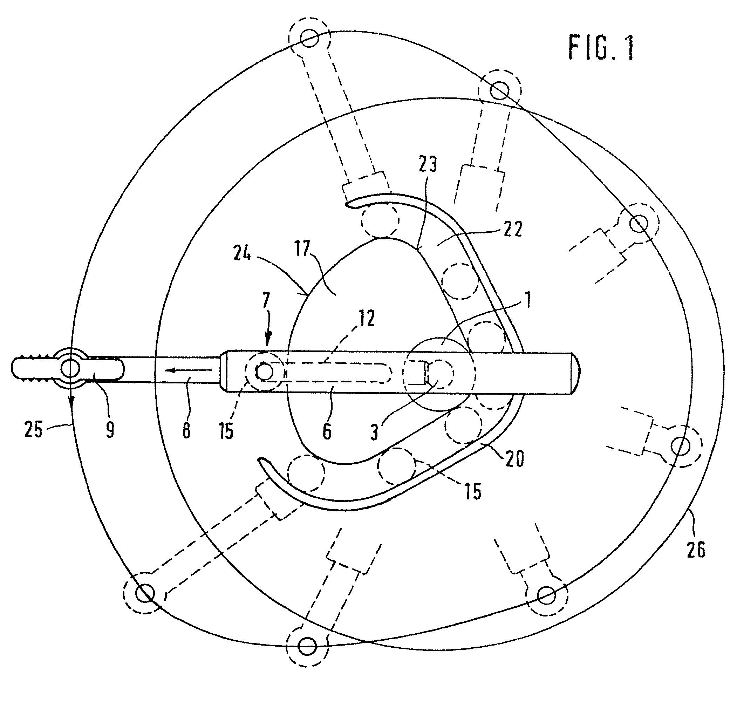

Die Kurvenscheibe 17 ist auf einem Teil ihres Umfanges von einem als Gegenkurve ausgebildeten Steg 20 umgeben, der mit Hilfe eines oder mehrerer Verbindungsstücke 21 an der Kurvenscheibe 17 befestigt ist. Zwischen der Kurvenscheibe 17 und dem Steg 20 ist ein Führungskanal 22 gebildet, in den die Abtastrolle 15 für die Rückziehphase der Stange 8 eingreift, wie insbesondere Fig. 1 zeigt. Der Führungskanal 22 bewirkt somit eine Zwangsführung der Abtastrolle 15. Da sich der Führungskanal 22 nur im hinteren Bereich der Kurvenscheibe 17 befindet, erfolgt auch nur hier die Zwangsführung, die zum Zurückziehen der Stange 8 benötigt wird. Zum Ausfahren der Stange 8 wird die Abtastrolle 15 von dem ansteigenden Abschnitt 23 der Kontur der Kurvenscheibe 17 nach aussen gedrückt und läuft dann im vorderen Bereich, nämlich im Bereich der eigentlichen Antriebsphase, über die kreisförmige vordere Kontur 24 der Kurvenscheibe 17 und hält die Stange hier in der maximal ausgefahrenen Position, weil die Rolle 13 an das Ende des Langloches 12 bzw. der Führungsschiene 16 stösst und dementsprechend die Stange 8 nicht weiter ausgefahren werden kann.

Statt der Zwangsführung durch den als Gegenkurve ausgebildeten Steg 20 könnte eine Anlage der Abtastrolle 15 an der Kontur der Kurvenscheibe 17 auch durch eine auf die Stange 8 wirkende Rückholeinrichtung wie beispielsweise eine in der Hülse 6 angebrachte Zugfeder, erreicht werden.

Fig. 1 zeigt, dass der Drehpunkt des Pedals 9 auf einer von der Kontur der Kurvenscheibe 17 bestimmten Umlaufbahn 25 bewegt wird, die im vorderen Bereich, nämlich im Bereich der Antriebsphase, über den um die Achse der Welle 3 gelegten üblichen Tretkreis 26 übersteht, während im hinteren Bereich, d.h. dem Bereich des Rücklaufes des Pedals diese Umlaufbahn 25 näher an der Achse der Welle 3 liegt. Dementsprechend wird für die Antriebsphase der zum Übertragen der aufgewendeten Muskelkraft zur Verfügung stehende Hebelarm vergrössert und dadurch der Wirkungsgrad verbessert, während dieser Hebelarm bei der Rücklaufphase kleiner ist. Der jeweils zur Verfügung stehende Hebelarm bestimmt sich aus dem veränderbaren Abstand zwischen der Achse der Welle 3 und der Drehachse des Pedals 9.

**Patentanspruch**

Tretkurbelantrieb für Fahrräder oder dergleichen, mit einer drehbar gelagerten Kurbelwelle, an deren Enden mittels um 180° gegeneinander versetzten teleskopartig gesteuerten zu verlängernden und zu verkürzenden radialen Kurbelarmen mit jeweils einer an der Kurbelwelle befestigten Hülse und einer aus derselben ausfahrbaren Stange je ein Pedal um eine zur Kurbelwelle parallele Achse drehbar gelagert ist, wobei die Hülse jedes Kurbelarms ein Langloch enthält, das ein an der in der Hülse drehfest geführten Stange gelagerter Bolzen durchgreift, der eine die Bahn einer feststehenden Kurvenscheibe abfahrende Abtastrolle trägt, und wobei der Kurvenbahn eine Führungsbahn in einem Abstand gegenüberliegt, der dem Durchmesser der Abtastrolle entspricht, dadurch gekennzeichnet, dass sich der Führungsbahnsteg (20) nur über den die Verkürzung des Kurbelarmes bewirkenden Teil des Umfangs der Kurvenscheibe (10) erstreckt und dass die Ausfahrlänge der Stange (8) durch ein Ende des Langlochs (12) begrenzt ist, wenn die Abtastrolle (15) über den führungsbahnfreien Teil der Kurvenscheibe (17) verläuft.

**Claim**

Pedal crank driving means for bicycles or the like, comprising a rotatable seated crank shaft, at each of the end of which a pedal is seated rotatable about an axis parallel to said crank shaft by means of crank arms being displaced against one another about 180° and being telescopally controlled to be lengthened or shortened, each of which crank arms having a case fixed at the crank shaft and a rod extractable from the case, whereby the case of each crank arm comprises an oblong hole passed by a bolt seated at said rod being guided resistant to torsion in said case, which bolt carries a cam follower roller passing over the way of a fixed cam disk, and whereby opposite of the cam way a guiding way is provided at a distance which corresponds to the diameter of said cam follower roller, characterized in that the guiding way strap (20) extends only over that portion of the periphery of said cam disk (17) effecting the shortening of said crank arm and that the extracting length of said rod (8) is limited by an end of said oblong hole (12) when said cam follower roller (15) runs along the guiding way free portion of said cam disk (17).

## Revendication

Dispositif d'entraînement à manivelle de pédalage pour bicyclettes ou analogues, comportant un arbre de manivelle qui tourillonne, aux extrémités duquel, au moyen de bras radiaux de manivelle, qui sont commandés télescopiquement, avec décalage de 180° l'un par rapport à l'autre, pour s'allonger et se raccourcir et qui présentent chacun une douille fixée à l'arbre de manivelle et une tige qui peut venir en extension hors de cette douille, une pédale tourillonne respectivement autour d'un axe parallèle à l'arbre de manivelle, étant précisé que la douille de chaque bras de manivelle comporte une lumière à travers laquelle passe un axe que porte la tige guidée, sans possibilité de rotation relative, dans la douille et qui porte un galet palpeur suivant la voie d'un disque à came fixe, et étant précisé qu'en face de la voie du disque à came se trouve, à une certaine distance, une voie de guidage qui correspond au diamètre du galet palpeur, caractérisé en ce que la nervure (20) de la voie de guidage ne s'étend que sur la partie de la périphérie du disque à came (10) qui réalise le raccourcissement du bras de manivelle; et en ce que la longueur d'extension de la tige (8) est limitée par une extrémité de la lumière (12) lorsque le galet palpeur (15) passe sur la partie du disque à came (17) qui ne comporte pas de voie de guidage.

FIG. 1

FIG. 2

FIG. 3

0 093 201